# EUROPEAN PATENT APPLICATION

(11) **EP 4 794 052 A1**
(43) Date of publication of application: **19.08.2026**
(21) Application number: 24899693.6
(22) Date of filing: 27.11.2024
(51) Int. Cl.: H01M 10/42

(54) **BATTERY PACK HAVING CUT-OFF PROTECTION FUNCTION, AND ENERGY STORAGE SYSTEM**

(30) Priority: 08.12.2023 CN 202311691834
(71) Applicant: Huawei Digital Power Technologies Co., Ltd., Shenzhen, Guangdong 518043 (CN)
(72) Inventor: YU, Shijiang, Shenzhen, Guangdong 518043 (CN); ZHU, Junwei, Shenzhen, Guangdong 518043 (CN); LI, Ping, Shenzhen, Guangdong 518043 (CN); YE, Wanxiang, Shenzhen, Guangdong 518043 (CN); CAO, Zhen, Shenzhen, Guangdong 518043 (CN); ZHOU, He, Shenzhen, Guangdong 518043 (CN); FU, Jiaguang, Shenzhen, Guangdong 518043 (CN)
(74) Representative: Gill Jennings & Every LLP
(86) International application number: PCT/CN2024/134887
(87) International publication number: WO 2025/119053

(57) **Abstract**

This application provides a battery pack with a breaking protection function and an energy storage system. The battery pack includes a battery module including a plurality of single cells, a breaking device connected in series to the battery module, a current sensor, and a controller. A first end of the current sensor is connected to a positive output end of the battery pack, and a second end of the current sensor is connected to a negative output end of the battery pack, to detect a current difference between the positive output end and the negative output end of the battery pack. The controller is configured to: when the current difference detected by the current sensor is greater than a first threshold, control the breaking device to be turned off, to quickly cut off a fault when the short-circuit to ground fault occurs in the cell in the battery pack, so as to ensure safe operation of the entire energy storage system.

## Description

This application claims priority to Chinese Patent Application No. 202311691834.7, filed with the China National Intellectual Property Administration on December 8, 2023 and entitled "BATTERY PACK HAVING BREAKING PROTECTION FUNCTION AND ENERGY STORAGE SYSTEM HAVING BREAKING PROTECTION FUNCTION", which is incorporated herein by reference in its entirety.

### TECHNICAL FIELD

This application relates to the field of energy technologies, and in particular, to a battery pack having a breaking protection function and an energy storage system having a breaking protection function.

### BACKGROUND

Currently, as a proportion of new energy gradually increases, to resolve a problem of intermittent and unstable large-scale photovoltaic power generation and wind power generation and the like, a configuration of a battery energy storage system is increasingly important, and a proportion of the configuration of the energy storage system also gradually increases. Due to a limitation of a processing granularity of a cell and a battery module, the battery energy storage system is generally formed by connecting a plurality of battery modules in series and then in parallel, and placing the plurality of battery modules together easily causes some safety hazards. In addition, some cells inevitably have specific defects in a material incoming process, a processing process, and another process of the cells, these defects may cause exceptions such as a failure caused by electrolyte leakage of these cells during use, and these exceptions may cause a short-circuit to ground fault of the cell. Therefore, how to design a safe protection solution to ensure that the fault does not spread even if the short-circuit to ground fault or another exception occurs in the cell is especially critical.

### SUMMARY

To resolve the foregoing problem, this application provides a battery pack having a breaking protection function and an energy storage system having a breaking protection function, so that when a fault (for example, a short-circuit to ground fault of a cell) occurs in the battery pack, the fault can be quickly cut off, to ensure safe operation of the energy storage system.

According to a first aspect, an embodiment of this application provides a battery pack. The battery pack includes a battery module, a breaking device, a first current sensor, and a first controller. The battery module includes a plurality of single cells connected in series. The breaking device is connected in series to the battery module. A first end of the first current sensor is connected to a positive output end of the battery pack, a second end of the first current sensor is connected to a negative output end of the battery pack, and the first current sensor is configured to detect a current difference between the positive output end and the negative output end of the battery pack. The first controller is configured to: when the current difference detected by the first current sensor is greater than a first threshold, control the breaking device to be turned off.

When a short-circuit to ground fault occurs in two battery packs in a same battery cluster, it is equivalent to that the plurality of cells are connected in series without a load. Because a voltage of the plurality of cells connected in series is extremely high, a fire risk is easily caused by voltage breakdown. In this case, because there are two current loops in an energy storage unit cluster, magnitudes of currents at two ends of the two battery packs in which the short-circuit to ground fault occurs are different. That is, there is a current difference between the two ends of the two battery packs in which the short-circuit to ground fault occurs. In this case, when the current difference detected by the first current sensor in the faulty battery pack is greater than the first threshold, the first controller in the battery pack controls the breaking device in the battery pack to be turned off, to further disconnect the faulty loops in the energy storage unit cluster, thereby avoiding a fire risk caused by voltage breakdown.

It should be understood that a specific location of the breaking device in the battery pack is not limited in embodiments of this application. To be specific, the breaking device may be connected in series to a negative electrode of the battery module, or may be connected in series to a positive electrode of the battery module. In the two cases, a first controller in one of the two battery packs in which the short-circuit to ground fault occurs can trigger a protection mechanism to control the breaking device in the same battery pack to be turned off, to further disconnect the faulty loops in the energy storage unit cluster, thereby avoiding the fire risk caused by voltage breakdown.

Optionally, the first controller and the first current sensor may be integrated on one circuit board. In other words, the first current sensor may be an intelligent current sensor that has a logic determining function and a control function.

Optionally, the first controller may be disposed independently of the first current sensor. The first controller may be an independent controller, or may be integrated into another device in the battery pack.

Optionally, the first current sensor may be a residual current operated protective device (residual current operated protective device, RCD).

Optionally, the breaking device may be a switch, a pyrofuse, a contactor, a relay, a circuit breaker, an insulated gate bipolar transistor (Insulated Gate Bipolar Transistor, IGBT), or a metal-oxide-semiconductor field-effect transistor (Metal Oxide Semiconductor Field Effect Transistor, MOSFET).

Optionally, the battery pack further includes a second current sensor and a second controller. The second current sensor is connected in series to the battery module and the breaking device. The second current sensor is configured to detect a magnitude of a passing current, and the second controller is configured to: when the current detected by the second current sensor is greater than a second threshold, control the breaking device to be turned off.

When a short-circuit to ground fault occurs in two battery packs in a same battery cluster, it is equivalent to that the plurality of cells are connected in series without a load. Because a voltage of the plurality of cells connected in series is extremely high, a fire risk is easily caused by voltage breakdown. In this case, a current in a current loop increases sharply. In other words, a current in a faulty current loop in a fault state of the battery pack increases sharply compared with that in a current loop in a normal operating state of the battery pack. That is, the current flowing through the second current sensor increases sharply. When a magnitude of the current detected by the second current sensor in the battery pack exceeds the second threshold, the breaking device in the same battery pack is controlled to be turned off, to disconnect the faulty loop, thereby avoiding a fire risk caused by voltage breakdown.

Both the first current sensor and the second current sensor are disposed in the battery pack, and a short-circuit to ground fault of the cell is detected by using two different detection methods, so that the fault can be detected more reliably and accurately, and breaking protection can be performed in time, to ensure safe operation of an energy storage system. In addition, when either the first current sensor or the second current sensor is faulty, a short-circuit to ground fault of a plurality of battery packs can still be detected through the other current sensor. This further improves reliability of the system.

It should be understood that the second current sensor and the breaking device need to be connected in series at a same side of the battery module, to implement functions of detection on the short-circuit to ground fault of the cell and breaking protection. Optionally, both the second current sensor and the breaking device may be connected in series to the negative electrode of the battery module, or both the second current sensor and the breaking device may be connected in series to the positive electrode of the battery module.

Optionally, the second current sensor may be connected in series between the battery module and the breaking device, or the breaking device may be connected in series between the battery module and the second current sensor.

Optionally, the second controller and the second current sensor are integrated on one circuit board. In other words, the second current sensor may be an intelligent current sensor that has a logic determining function and a control function.

Optionally, the second controller may be disposed independently of the second current sensor. The second controller may be an independent controller, or may be integrated into another device in the battery pack.

Optionally, the first controller and the second controller may be two independent controllers. For example, the first controller and the second controller may be integrated into different devices or circuit boards respectively. For example, the first controller and the second controller may be integrated into a first current controller and a second current controller respectively.

Optionally, the first controller and the second controller may be a same controller. In other words, the same controller is used to perform functions of the first controller and the second controller. For example, a BMS may perform the functions of the first controller and the second controller.

Optionally, only one of the first current sensor and the second current sensor is in an operating state at a same moment, to save electric energy while improving system reliability.

Optionally, when the first controller and the second controller are two independent controllers, only one of the first controller and the second controller may be controlled to be in an operating state at a same moment, to save electric energy while improving reliability of the system.

Optionally, one contention signal may be set to ensure that only one of the first current sensor and the second current sensor is in the operating state at the same moment. Specifically, an operating state of the second current sensor may be controlled based on an operating state of the first current sensor. When the first current sensor is in an operating state, the second current sensor is controlled to stop operating, or when the first current sensor is in a non-operating state, the second current sensor is controlled to operate.

Generally, the first current sensor has higher accuracy, faster response, and better effect than the second current sensor in detecting the short-circuit to ground fault of the cell. Therefore, a priority of the first current sensor is set to be higher than a priority of the second current sensor, to help improve effect of detecting the short-circuit to ground fault of the cell.

Optionally, when the function of the first controller and the function of the second controller are implemented by one centralized controller (for example, the BMS) (the centralized controller is referred to as the first controller herein), the first controller is further configured to: when the first current sensor is in the operating state, control the second current sensor not to operate. For example, the first controller may send a first control signal to the second current sensor. The first control signal indicates the second current sensor not to operate.

Optionally, when the first controller and the second controller are two independent controllers, and the first controller and the second controller are respectively configured to control the first current sensor and the second current sensor, switching between the first current sensor and the second current sensor for operating may be controlled by the first controller. Specifically, the first controller is further configured to send a second control signal to the second controller when the first current sensor is in the operating state, where the second control signal indicates the second current sensor not to operate. The second controller is configured to control, based on the second control signal, the second current sensor not to operate.

Optionally, the second current sensor is powered by the battery module in the same battery pack. In this case, the functions of detection on the short-circuit to ground fault and breaking protection can be implemented without an external power supply. This can ensure that the short-circuit to ground fault of the cell can still be detected when the energy storage system is not connected to an alternating current power grid or when an alternating current power grid connected to the energy storage system is powered off.

Optionally, when the second controller is integrated into the second current sensor, the second controller may also be powered by the battery module in the same battery pack. That is, both the second current sensor and the second controller are powered by the same battery module. This can ensure that the short-circuit to ground fault of the cell can still be detected when the energy storage system is not connected to the alternating current power grid or when the alternating current power grid connected to the energy storage system is powered off, and can ensure that breaking protection can be performed in time.

Optionally, the first current sensor may be any one of a Hall effect sensor, a tunnel magneto resistance (Tunnel Magneto Resistance, TMR) sensor, an anisotropic magneto resistance (Anisotropic Magneto Resistive, AMR) sensor, and a giant magneto resistance (Giant Magneto Resistive, GMR) sensor.

According to a second aspect, this application provides an energy storage system. The energy storage system may include at least one energy storage unit cluster and a direct current/alternating current converter. The energy storage unit cluster includes at least two battery packs in any one of the possible implementations in the first aspect. The at least two battery packs are connected in series. The energy storage unit cluster is connected to an alternating current power grid or a load through the direct current/alternating current converter.

Optionally, the energy storage unit cluster further includes a secondary power supply, and two ends of the secondary power supply are connected to a positive output end and a negative output end of the energy storage unit cluster respectively.

Optionally, the first current sensor is powered by the secondary power supply.

Optionally, when the first controller is integrated into the first current sensor, the first controller is powered by the secondary power supply.

When the energy storage system is connected to the alternating current power grid and the alternating current power grid is powered on, the cluster-level secondary power supply is also powered on. The cluster-level secondary power supply is used to supply power to the first current sensor and/or the first controller, to ensure normal operation of the first current sensor and/or the first controller.

For technical effect that can be achieved by any possible design in the second aspect, refer to the technical effect that can be achieved by any possible design in the first aspect. Details are not described herein again. These aspects or other aspects of this application are clearer and more comprehensible in descriptions of the following embodiments.

### BRIEF DESCRIPTION OF DRAWINGS

To describe technical solutions in embodiments of this application or in the background more clearly, the following briefly describes accompanying drawings for describing embodiments of this application or the background.
FIG. 1 is a diagram of a structure of a battery cluster in commercial and industrial scenarios;
FIG. 2 is a diagram of a structure of a battery cluster in a power plant scenario;
FIG. 3 is a diagram of a structure of an energy storage system according to an embodiment of this application;
FIG. 4 is a diagram of a structure of another energy storage system according to an embodiment of this application;
FIG. 5 is a diagram of a structure of another energy storage system according to an embodiment of this application;
FIG. 6 is a diagram of a structure of another energy storage system according to an embodiment of this application;
FIG. 7 is a diagram of a structure of an energy storage unit cluster according to an embodiment of this application;
FIG. 8 is a diagram of a current loop of an energy storage system in a normal operating state according to an embodiment of this application;
FIG. 9 is a diagram of a current loop of an energy storage system in a case in which a short-circuit to ground fault occurs in two or more battery packs according to an embodiment of this application;
FIG. 10 is a diagram of a current loop of another energy storage system in a case in which a short-circuit to ground fault occurs in two or more battery packs according to an embodiment of this application;
FIG. 11 is a diagram of a structure of another energy storage unit cluster according to an embodiment of this application;
FIG. 12 is a diagram of a current loop of another energy storage system in a normal operating state according to an embodiment of this application;
FIG. 13 is a diagram of a current loop of another energy storage system in a case in which a short-circuit to ground fault occurs in two or more battery packs according to an embodiment of this application; and
FIG. 14 is a diagram of a current loop of another energy storage system in a case in which a short-circuit to ground fault occurs in two or more battery packs according to an embodiment of this application.

### DESCRIPTION OF EMBODIMENTS

To make objectives, technical solutions, and advantages of this application clearer, the following describes embodiments of the present invention with reference to accompanying drawings in embodiments of the present invention. The following description shows drawings showing specific aspects of embodiments of the present invention or specific aspects in which embodiments of the present invention may be used. It should be understood that embodiments of the present invention may be used in other aspects, and may include structural or logic changes not depicted in the accompanying drawings. The following detailed description, therefore, is not to be taken in a limiting sense, and the scope of the present invention is defined by the appended claims.

It should be noted that, in descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more, and "at least one" and "one or more" mean one, two, or more. The singular expression forms "one", "a", "the", "the foregoing", "this", and "the one" are also intended to include expression forms such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

In the descriptions of embodiments of this application, orientations or position relationships indicated by the terms "up", "down", "left", "right", "vertical", "horizontal", and the like are defined relative to orientations or positions in which components are schematically placed in the accompanying drawings. It should be understood that these directional terms are relative concepts, and are used for relative description and clarification, but not indicate or imply that a specified apparatus or component needs to have a specific orientation or be constructed and operated in a specific orientation. These directional terms may vary accordingly based on a change of the orientation in which a component is placed in the accompanying drawings, and therefore cannot be understood as a limitation on this application.

In embodiments of this application, a same reference numeral indicates a same component or a same part. In addition, parts in the accompanying drawings are not drawn based on an actual scale. Dimensions and sizes of the parts shown in the figures are merely examples, and should not be understood as a limitation on this application.

In this application, unless otherwise explicitly specified and limited, the terms "install", "connect", "connection", "fasten", "communicate", "configure", and the like should be understood in a broad sense, for example, may be a fixed connection, a detachable connection, detachable fastening, or an integrated connection; may be a mechanical connection or an electrical connection; or may be a direct connection, an indirect connection through an intermediate medium, an internal communication between two devices, or an interaction relationship between two devices, unless otherwise specified. A person of ordinary skill in the art may understand specific meanings of the foregoing terms in this application based on specific cases.

It should be noted that when a device is referred to as "fastened to", "disposed on", or "installed on" another device, the device may be directly on the another device, or an intermediate device may exist. When one device is considered to be "connected to" another device, the device may be directly connected to another device, or an intermediate device may exist at the same time. The terms "vertical", "horizontal", "up", "down", "left", "right", and similar expressions used in this specification are merely for description, and do not indicate that there is only one implementation.

Terms used in implementations of the present invention are merely intended to explain specific embodiments of the present invention, and are not intended to limit the present invention.

Currently, as a proportion of new energy gradually increases, to resolve a problem of intermittent and unstable large-scale photovoltaic power generation and wind power generation and the like, a configuration of a battery energy storage system is increasingly important, and a proportion of the configuration of the energy storage system also gradually increases. Due to a limitation of a processing granularity of a cell and a battery module, the battery energy storage system is generally formed by connecting a plurality of battery modules in series and then in parallel, and placing the plurality of battery modules together easily causes some safety hazards. In addition, some cells inevitably have specific defects in a material incoming process, a processing process, and another process of the cells, these defects may cause exceptions such as a failure caused by electrolyte leakage of these cells during use, and these exceptions may cause a short-circuit to ground fault of the cell. Therefore, how to design a safe protection solution to ensure that the fault does not spread even if the short-circuit to ground fault or another exception occurs in the cell is especially critical.

In the energy storage system, if a short-circuit to ground fault occurs in a cell in a single battery pack, this has little impact on operation of the entire energy storage system. However, if a short-circuit to ground fault occurs in cells in two or more battery packs, a fire risk is easily caused by voltage breakdown, and seriously endangers safe operation of the entire energy storage system.

For a potential fault possibility of the energy storage system, namely, a possibility that a short-circuit to ground fault inevitably occurs in the cell in the battery pack, a plurality of manners are used to ensure safe operation of the energy storage system in the conventional technology.

For example, in the conventional technology, a common fuse is usually disposed in the battery pack, a cluster-level high-voltage common fuse is disposed in a cluster control box, and the common fuse in the battery pack and the high-voltage common fuse in the cluster control box are blown when a passing current is greater than a threshold, to perform breaking protection on a differential mode fault caused by a failure of a component such as a power converter.

In addition, a cluster-level insulation resistance detection function and a cluster-level switch are also disposed in the cluster control box. When insulation between the cell and the ground fails due to electrolyte leakage of the cell, a foreign object entering the pack, and other cases, an insulation resistance detection circuit can identify an insulation resistance exception before the system is powered on, and control the cluster-level switch to be turned off, to perform breaking protection. However, the insulation resistance detection circuit cannot identify an exception when the system is powered on for operation, and consequently cannot provide effective protection when the system is powered on for operation.

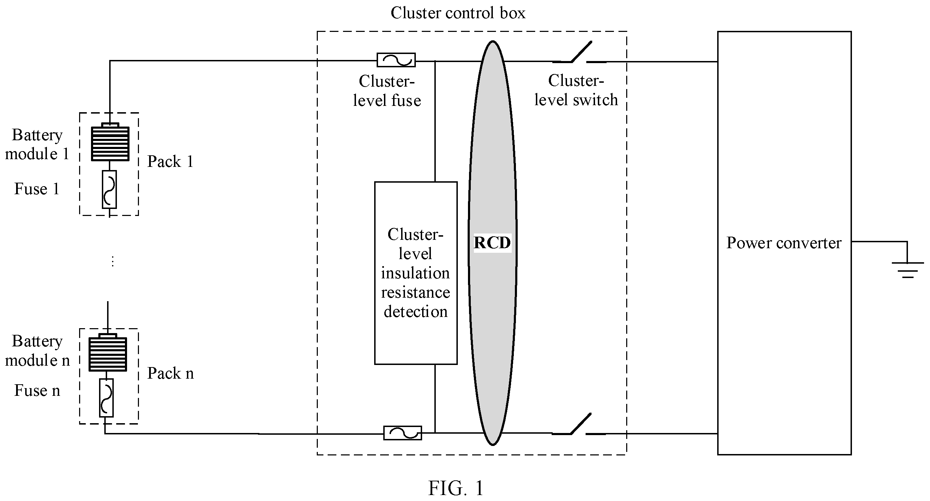

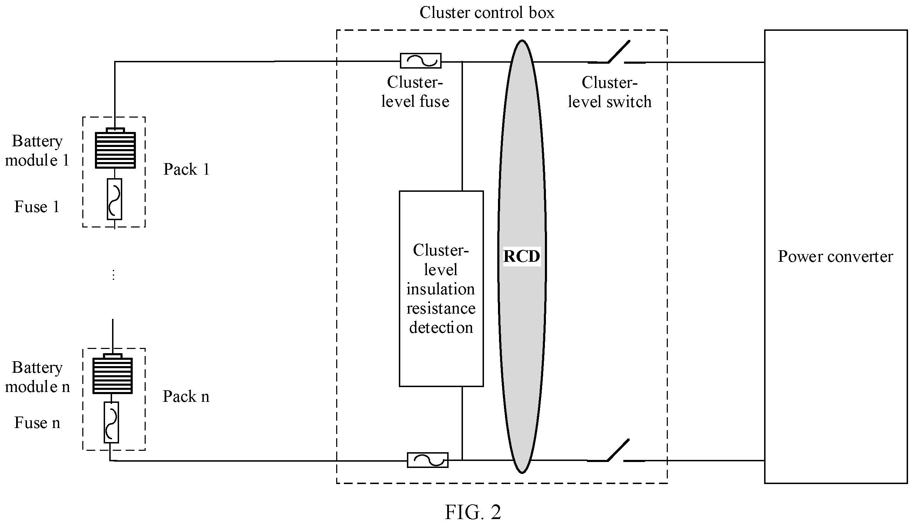

In addition, a residual current operated protective device (residual current operated protective device, RCD) is also disposed in the cluster control box. FIG. 1 is a diagram of a structure of a battery cluster in commercial and industrial scenarios. As shown in FIG. 1, in the commercial and industrial scenarios, an alternating current side of a power converter is grounded. Therefore, when insulation between a single battery pack and the ground fails (that is, a short-circuit to ground fault occurs in a cell in a single battery pack), the cluster-level RCD can detect a fault current, and a cluster-level switch is triggered to perform breaking protection. However, when a short-circuit to ground fault occurs in cells in two or more battery packs in a same battery cluster, even if the cluster-level switch is turned off, a fire risk may still be caused by voltage breakdown between the two battery packs in which the short-circuit to ground fault occurs in the battery cluster. Therefore, when the short-circuit to ground fault occurs in the cells in the two or more battery packs in the same battery cluster, turning off the cluster-level switch cannot effectively prevent a risk such as a fire. FIG. 2 is a diagram of a structure of a battery cluster in a power plant scenario. As shown in FIG. 2, in the power plant scenario, an alternating current side of a power converter is not grounded. Therefore, regardless of whether a short-circuit to ground fault occurs in a single battery pack or a plurality of battery packs (that is, the short-circuit to ground fault occurs in cells in the plurality of battery packs), a cluster-level RCD cannot detect a fault current, and a cluster-level switch cannot be triggered to perform breaking protection. In addition, in a scenario in which the energy storage system is not powered on (for example, transportation and storage scenarios), the cluster-level RCD cannot detect the short-circuit to ground fault of the cell in the pack, and breaking protection cannot be triggered.

To resolve the foregoing problems, this application provides a battery pack and an energy storage system, so that when a short-circuit to ground fault occurs in cells in two or more battery packs in a battery cluster, the fault can quickly cut off, to ensure safe operation of the energy storage system.

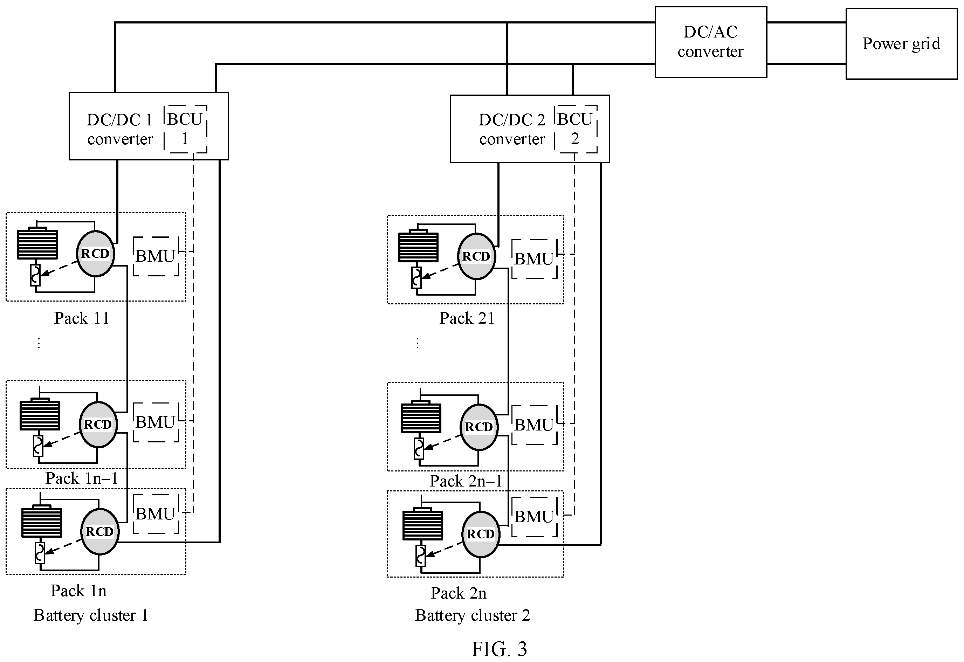

First, the energy storage system provided in embodiments of this application is described. FIG. 3 to FIG. 6 are diagrams of structures of four energy storage systems according to embodiments of this application. Refer to FIG. 3 to FIG. 6. The energy storage system provided in embodiments of this application includes one or more energy storage unit clusters (two energy storage unit clusters: a battery cluster 1 and a battery cluster 2, are shown in the figure). One energy storage unit cluster may include at least two battery packs (each battery cluster includes N battery packs in the figure), and the battery packs are connected in series to each other. In other words, one energy storage unit cluster may be formed by connecting at least two battery packs in series. An internal structure of the battery pack is described in detail below.

It should be noted that the energy storage system provided in embodiments of this application involves a multi-layer structure. A first layer is referred to as the energy storage system or a battery energy storage system, a second layer is referred to as an energy storage unit cluster or a battery cluster, a third layer is referred to as a battery pack or a pack, and a fourth layer is referred to as a battery module. Different names of a same layer structure in embodiments of this application have a same meaning, represent a specific layer structure, and are not distinguished in embodiments of this application. The battery module may be formed by connecting a plurality of cells in series. The battery pack may include a battery module, a battery management unit (battery management unit, BMU), and an optimizer. The battery cluster may include a plurality of battery packs connected in series. The energy storage system may include a plurality of battery clusters connected in parallel. As shown in FIG. 3 to FIG. 6, in the energy storage system provided in this application, the one or more energy storage unit clusters may be described by using the battery cluster 1 and the battery cluster 2 as an example. The battery cluster 1 may include a pack 11 to a pack 1n that are connected in series, and the battery cluster 2 may include a pack 21 to a pack 2n that are connected in series, where n is an integer.

In a possible implementation, each battery cluster in the energy storage system may be coupled to a direct current bus through a direct current (direct current, DC)/direct current converter (DC/DC converter). One battery cluster is coupled to the direct current bus through one DC/DC converter. As shown in FIG. 3, the battery cluster 1 may be coupled to the direct current bus through a converter DC/DC 1, and the battery cluster 2 may be coupled to the direct current bus through a converter DC/DC 2. Each battery cluster is coupled to the direct current bus through a DC/DC converter to implement simple parallel expansion of a plurality of battery clusters, thereby increasing energy storage capacity of the energy storage system. Flexible control on energy of a single battery cluster and fast switching of a single battery cluster in an abnormal operating condition can also be implemented through the DC/DC converter. Therefore, applicability is high. After a plurality of battery clusters are connected in parallel, one direct current/alternating current (alternating current, AC) inverter (DC/AC converter) may be shared to convert a direct current into an alternating current, and energy may be exchanged with an alternating current power grid.

Herein, the DC/DC converter may be a bidirectional DC/DC converter, and a circuit topology of the bidirectional DC/DC converter may be an isolated circuit topology or a non-isolated circuit topology. A boost ratio of the bidirectional DC/DC converter is determined by a voltage of the direct current bus and a port voltage of the battery cluster. The battery cluster 1 is used as an example. Because a port voltage of a battery changes with energy storage capacity of the battery, a port voltage of the battery cluster 1 changes with a quantity of battery packs connected in series in the battery cluster 1. When the quantity of battery packs connected in series in the battery cluster 1 changes greatly, the port voltage of the battery cluster 1 also changes greatly. For example, it is assumed that a port voltage of a battery pack is 50 V. When two battery packs are connected in series in the battery cluster 1, the port voltage of the battery cluster 1 is 100 V. When 30 battery packs are connected in series in the battery cluster 1, the port voltage of the battery cluster 1 is 1500 V, namely, an upper-limit voltage of a low-voltage system. Therefore, the port voltage of the battery cluster 1 may be an output voltage in a wide range, for example, 100 V to 1500 V. To match a change range of the port voltage of the battery cluster 1, the converter DC/DC 1 may usually be implemented by a non-isolated circuit topology, and may be designed as a converter having a wide-range input/output capability, to flexibly adapt to different input/output voltages. Herein, the circuit topology of the bidirectional DC/DC converter (including the converter DC/DC 1, the converter DC/DC 2, and the like) may be a boost circuit (boost circuit), a flying-capacitor boost circuit (boost circuit boost circuit), a flying-capacitor multilevel circuit (flying capacitor multilevel circuit), a positive-negative symmetric three-level boost circuit (three-level boost circuit), a four-switch buck-boost circuit (four-switch buck-boost circuit), or the like. This may be specifically determined based on a requirement of an actual application scenario. A boost ratio of the converter DC/DC 1 may be determined based on the voltage of the direct current bus and the port voltage of the battery cluster 1. This may be specifically determined based on an actual application scenario.

In some feasible implementations, to manage a single battery cluster, a battery control unit (battery control unit, BCU) may be added for each battery cluster, where one battery cluster corresponds to one battery control unit BCU. For example, the battery cluster 1 may correspond to a battery control unit BCU 1 in the converter DC/DC 1, and the battery cluster 2 may correspond to a battery control unit BCU 2 in the converter DC/DC 2. The battery control unit of each battery cluster may be connected to battery packs in the battery cluster through a control bus, and the battery control unit may exchange information with the battery packs in the battery cluster in real time, to implement real-time and unified monitoring of the battery packs in the battery cluster, and further implement flexible control on the energy storage system. Therefore, applicability is high. Optionally, when the battery control unit BCU is an independently arranged circuit module, a battery control unit corresponding to a single battery cluster exchanges information with a controller in a DC/DC converter, and the battery control unit is connected to battery packs in the battery cluster through a control bus. In a specific implementation, a manner of information exchange between the battery control unit BCU and the battery pack may alternatively be wireless communication, direct current power carrier communication, or the like. This may be specifically determined based on an actual application scenario. Therefore, an operation is flexible and applicability is high. Optionally, when a battery control unit BCU of a single battery cluster is integrated, as a separate circuit board or circuit module, into a DC/DC converter connected to the battery cluster, a system structure of the energy storage system can be simplified. In addition, because the single battery cluster is usually installed near the DC/DC converter, integrating the battery control unit of the single battery cluster into the DC/DC converter facilitates connection of the control bus.

Optionally, in some feasible implementations, to implement state monitoring and control on a battery pack, a BMU may be added to a battery pack in each battery cluster. The BMU may include a module battery management system (module battery management system, MBMS) and a corresponding sampling control module, communication module, power supply module, driving control circuit of a switching bridge arm, and the like, to implement state detection and control on each energy storage element group (namely, each battery string) in the battery pack. The battery control unit BCU of the battery cluster is communicatively connected to a battery management unit BMS in the battery pack, to jointly implement state detection and control on the battery pack.

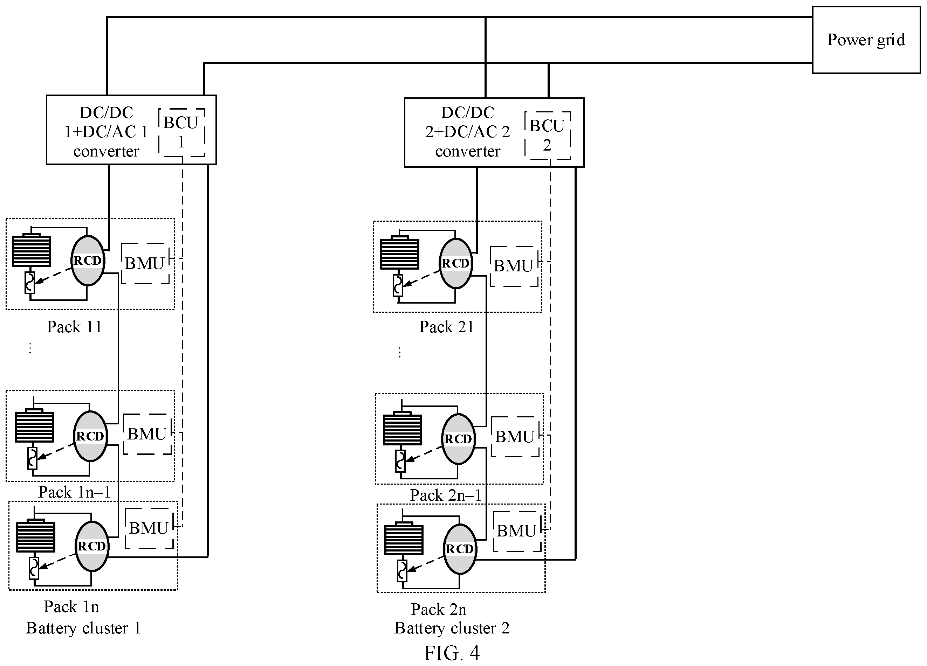

In a possible implementation, a DC/AC converter may be separately configured for each battery cluster. In other words, a plurality of battery clusters do not share a DC/AC converter, and the battery cluster directly outputs a converted alternating current to an alternating current power grid. As shown in FIG. 4, the battery cluster 1 may be coupled to the alternating current power grid through a converter DC/DC 1 and a converter DC/AC 1, and the battery cluster 2 may be coupled to the alternating current power grid through a converter DC/DC 2 and a converter DC/AC 2. Each battery cluster is coupled to the alternating current power grid through the DC/DC converter and the DC/AC converter, to implement simple parallel expansion of the plurality of battery clusters, thereby increasing energy storage capacity of the energy storage system, and to exchange energy with the alternating current power grid.

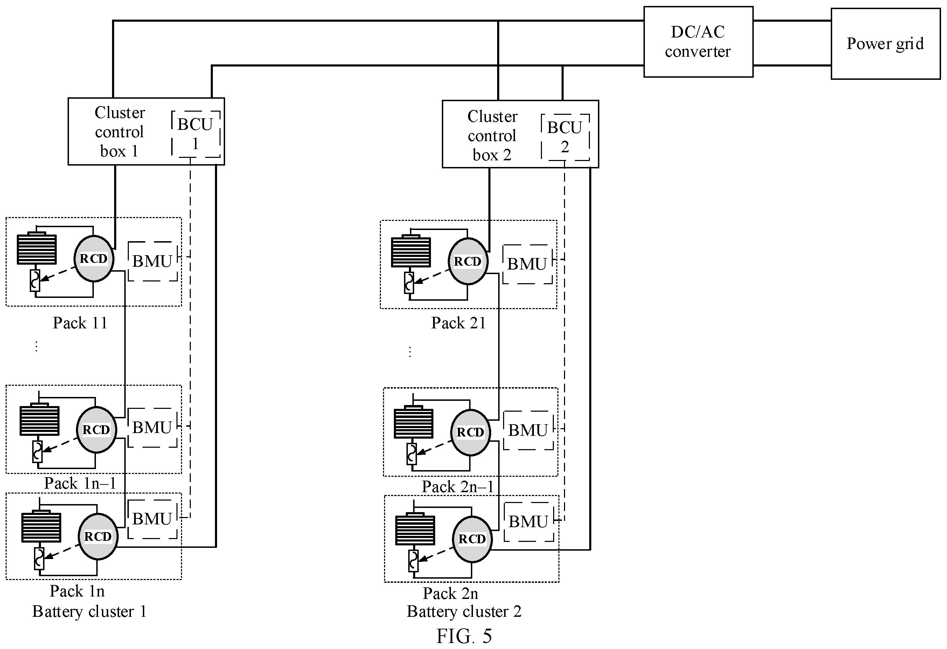

In a possible implementation, one cluster control box may alternatively be configured for each battery cluster, to uniformly control the single battery cluster. Devices such as a cluster-level fuse, a cluster-level insulation resistance detection device, and a cluster-level switch may be disposed in the cluster control box, to implement management and protection at a battery cluster level. As shown in FIG. 5, the battery cluster 1 may be coupled to a direct current bus through a cluster control box 1, and the battery cluster 2 may be coupled to the direct current bus through a cluster control box 2. Each battery cluster is coupled to the direct current bus through the cluster control box to implement simple parallel expansion of the plurality of battery clusters, thereby increasing energy storage capacity of the energy storage system. After the plurality of battery clusters are connected in parallel, one DC/AC converter may be shared to convert a direct current into an alternating current, and energy may be exchanged with the alternating current power grid.

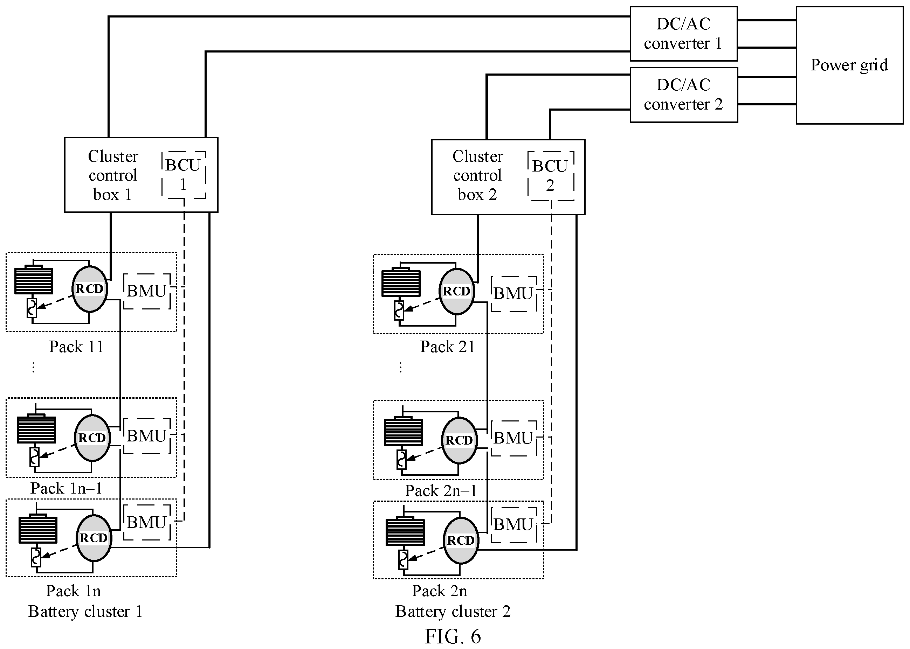

In a possible implementation, a DC/AC converter may be separately configured for each battery cluster after one cluster control box is configured for each battery cluster. In other words, a plurality of battery clusters do not share a DC/AC converter, and the battery cluster directly outputs a converted alternating current to an alternating current power grid. As shown in FIG. 6, electric energy output by a battery cluster 1 after passing through a cluster control box 1 may be coupled to the alternating current power grid through a converter DC/AC 1, and electric energy output by a battery cluster 2 after passing through a cluster control box 2 may be coupled to the alternating current power grid through a converter DC/AC 2. Each battery cluster is coupled to the alternating current power grid through the DC/AC converter, to implement simple parallel expansion of the plurality of battery clusters, thereby increasing energy storage capacity of the energy storage system, and to exchange energy with the alternating current power grid.

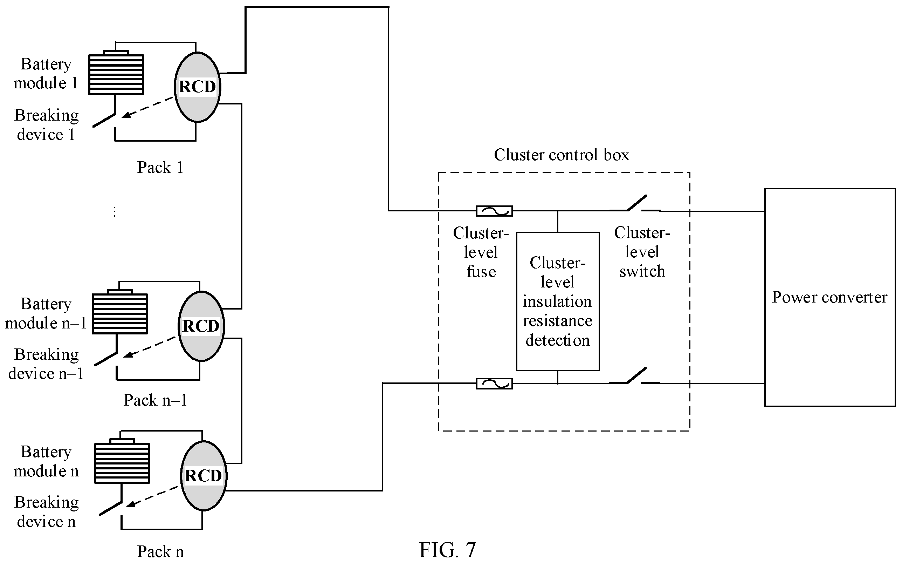

Next, the internal structure of the battery pack provided in embodiments of this application is described. FIG. 7 is a diagram of a structure of an energy storage unit cluster according to an embodiment of this application. The energy storage unit cluster includes a plurality of battery packs connected in series and one cluster control box. As shown in FIG. 7, each battery pack in this embodiment of this application includes a battery module, a breaking device (a switch is used as an example in FIG. 7), a first current sensor (an RCD is used as an example in FIG. 7), and a first controller (not shown in FIG. 7). For example, the energy storage unit cluster shown in FIG. 7 includes a pack 1, ..., a pack n-1, and a pack n. The pack 1 includes a battery module 1, a breaking device 1, and an RCD 1, and the pack n includes a battery module n, a breaking device n, and an RCD n.

The battery module includes a plurality of single cells, and the plurality of single cells are connected to each other in series, to expand capacity of the battery pack. It should be understood that a quantity of single cells in the battery module may be flexibly set based on an actual requirement.

The breaking device is connected to the battery module in series. In FIG. 7, the breaking device is connected in series to a negative electrode of the battery module. It should be understood that the breaking device may alternatively be connected in series to a positive electrode of the battery module. Relative positions of the breaking device and the battery module are not limited in embodiments of this application. The breaking device in this embodiment of this application is a controllable breaking device. To be specific, the breaking device performs breaking under control of a control signal, to disconnect a current path in the battery pack. For example, the breaking device may be a switch, a pyrofuse, a contactor, a relay, a circuit breaker, an insulated gate bipolar transistor (Insulated Gate Bipolar Transistor, IGBT), or a metal-oxide-semiconductor field-effect transistor (Metal Oxide Semiconductor Field Effect Transistor, MOSFET). When the breaking device is a switch, the switch may be turned off under control of the control signal, to disconnect the current path in the battery pack. When the breaking device is a pyrofuse, the pyrofuse may be disconnected under control of the control signal, to disconnect the current path in the battery pack. It should be understood that any device that can perform breaking based on the control signal may serve as the controllable breaking device in this embodiment of this application, and the controllable breaking device may be flexibly selected based on an actual requirement.

A first end of the first current sensor is connected to a positive output end of the battery pack, and a second end of the first current sensor is connected to a negative output end of the battery pack, to detect a current difference between the positive output end and the negative output end of the battery pack. In a possible implementation, the first current sensor may be a device configured to detect the current difference. In another possible implementation, the first current sensor may alternatively be a circuit configured to detect the current difference. For example, the first current sensor may be a residual current operated protective device (residual current operated protective device, RCD). It should be understood that any sensor that can be connected to two ends of the battery pack to obtain a current difference between two ends may serve as the first current sensor in this embodiment of this application, and the first current sensor may be flexibly selected based on an actual requirement.

The first controller is configured to: when the current difference between the positive output end and the negative output end of the battery pack is greater than a first threshold, control the breaking device to be turned off. In other words, the first controller always controls, when the current difference detected by the first current sensor is greater than the first threshold, the breaking device to be turned off.

In a possible implementation, the first controller and the first current sensor may be integrated on one circuit board. In other words, the first current sensor may be an intelligent current sensor that has a logic determining function and a control function. In another possible implementation, the first controller may be disposed independently of the first current sensor. The first controller may be an independent controller, or may be integrated into another device in the battery pack. In another possible implementation, the first controller may alternatively be a BMS in the battery pack.

In a possible implementation, no cluster control box may be disposed in the energy storage unit cluster provided in this embodiment of this application. In another possible implementation, a cluster control box may be disposed at an energy storage unit side provided in this embodiment of this application, and a cluster-level fuse, a cluster-level switch, or a cluster-level insulation resistance detection circuit may be disposed in the cluster control box. For example, an RCD may be disposed in the cluster control box to detect a current difference between a positive output end and a negative output end of a battery cluster, to further improve safety of an energy storage system. Alternatively, in consideration of costs, after the first current sensor is disposed in the battery pack, no RCD is disposed in the cluster control box.

The following describes an operating principle of the energy storage unit cluster shown in FIG. 7 provided in this embodiment of this application.

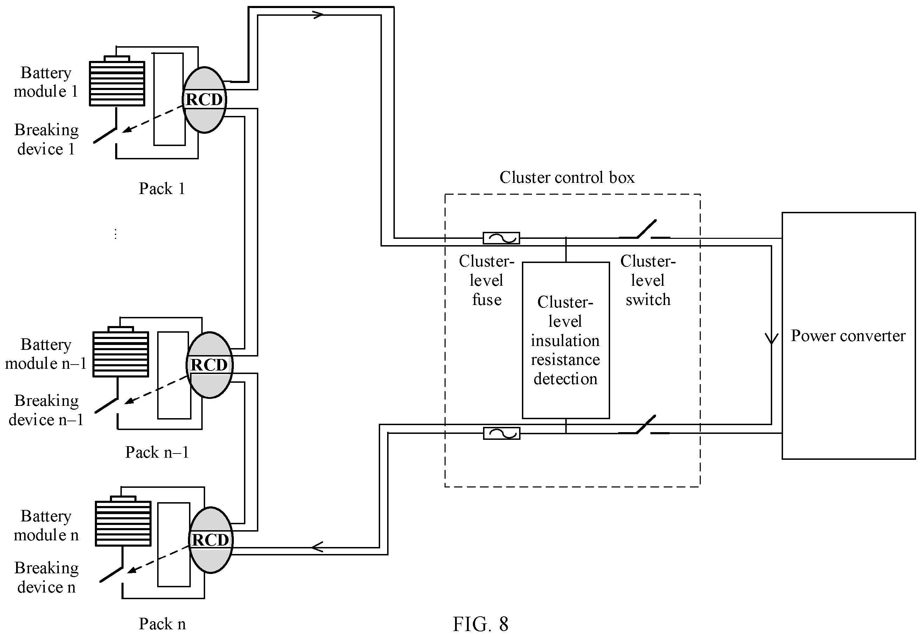

FIG. 8 is a diagram of a current loop of the energy storage system shown in FIG. 7 in a normal operating state. As shown in FIG. 8, when the energy storage system operates normally, currents at two ends of a battery pack in the energy storage unit cluster need to be approximately equal. In other words, when the energy storage system operates normally, there is no current difference between the two ends of the battery pack, or there is only a small current difference between the two ends of the battery pack. Therefore, the first threshold is properly set, so that when the energy storage system operates normally, the current difference detected by the first current sensor is not greater than the first threshold, and the breaking device is in an on state.

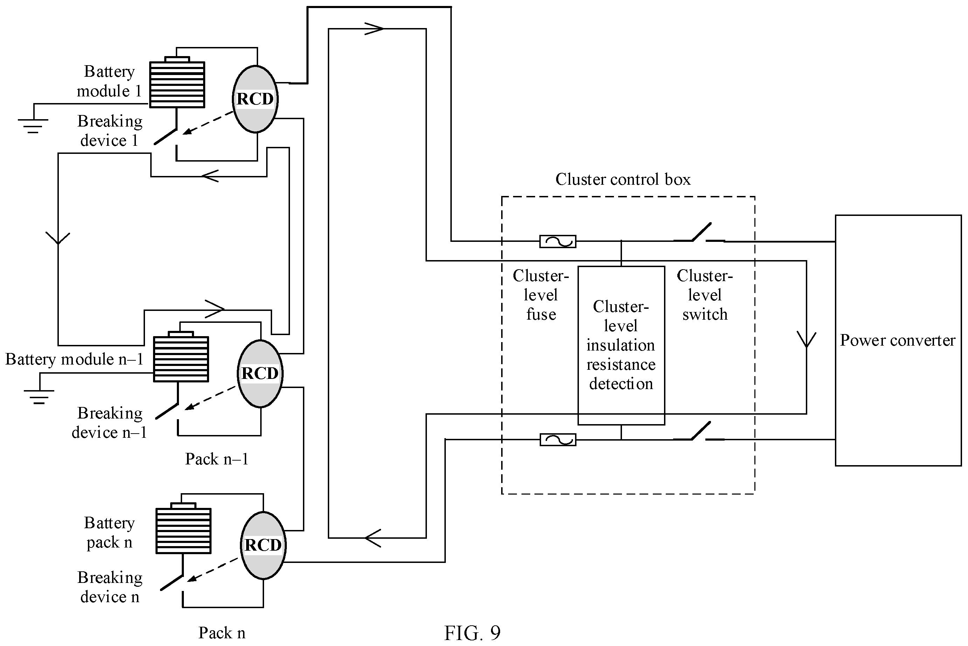

FIG. 9 is a diagram of a current loop of the energy storage system shown in FIG. 7 in a case in which a short-circuit to ground fault occurs in two or more battery packs. As shown in FIG. 9, the short-circuit to ground fault occurs in cells in the battery pack 1 and the battery pack n-1. In this case, because there are two grounding points, it is equivalent to that a plurality of cells are connected in series without a load. Because a voltage of the plurality of cells connected in series is extremely high, a fire risk is easily caused by voltage breakdown. In this case, because there are two current loops in the energy storage unit cluster, magnitudes of currents at two ends of the two battery packs in which the short-circuit to ground fault occurs are different. That is, there is a current difference between the two ends of the two battery packs in which the short-circuit to ground fault occurs. In this embodiment of this application, when the current difference detected by the first current sensor in the battery pack in which the short-circuit to ground fault occurs is greater than the first threshold, the breaking device in the same battery pack is controlled to be turned off, to disconnect the faulty loops in the energy storage unit cluster. FIG. 9 is used as an example. The breaking device is connected in series to the negative electrode of the battery module. When the short-circuit to ground fault occurs in the cells in the pack 1 and the pack n-1, there is a current difference between a positive output end and a negative output end of the pack 1. The current difference detected by the first current sensor in the pack 1 is greater than the first threshold, and the first controller in the pack 1 is triggered to control the breaking device 1 to be turned off. A faulty loop in FIG. 9 may be disconnected by turning off the breaking device 1, to avoid a fire risk caused by voltage breakdown.

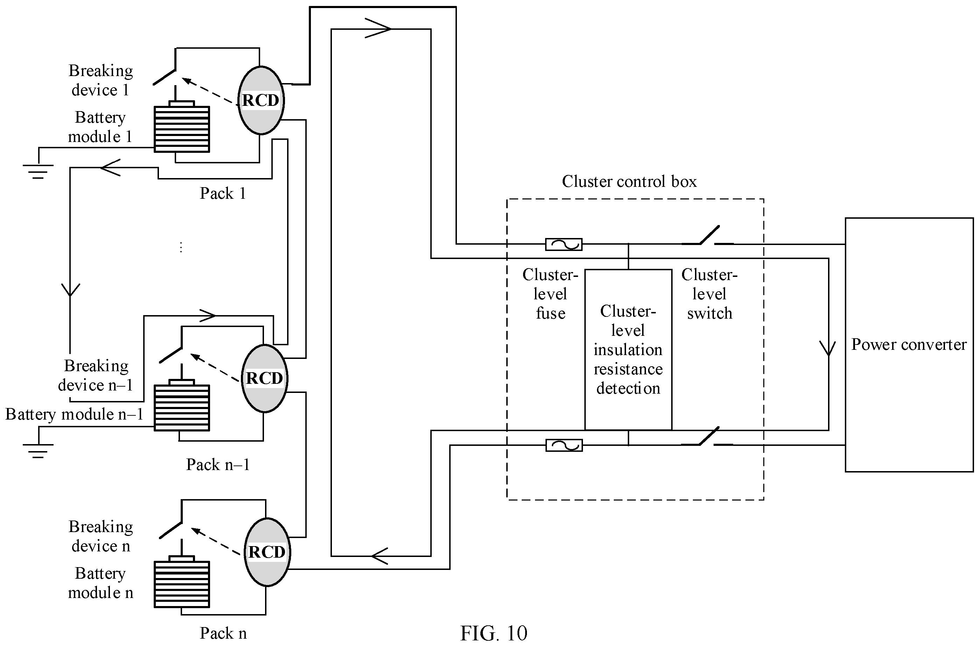

FIG. 10 is a diagram of a current loop of another energy storage system in a case in which a short-circuit to ground fault occurs in two or more battery packs according to an embodiment of this application. A difference between FIG. 10 and FIG. 9 lies in that the breaking device in FIG. 9 is connected in series to the negative electrode of the battery module and a breaking device in FIG. 10 is connected in series to a positive electrode of a battery module. As shown in FIG. 10, when the short-circuit to ground fault occurs in cells in a pack 1 and a pack n-1, there is a current difference between a positive output end and a negative output end of the pack n-1. The current difference detected by a first current sensor in the pack n-1 is greater than the first threshold, and a first controller in the pack n-1 is triggered to control a breaking device n-1 to be turned off. A faulty loop in FIG. 10 may be disconnected by turning off the breaking device n-1, to avoid a fire risk caused by voltage breakdown. It can be learned that, regardless of whether the breaking device is connected in series to the positive electrode of the battery module or the negative electrode of the battery module, a breaking protection function can be implemented. This is not limited in embodiments of this application.

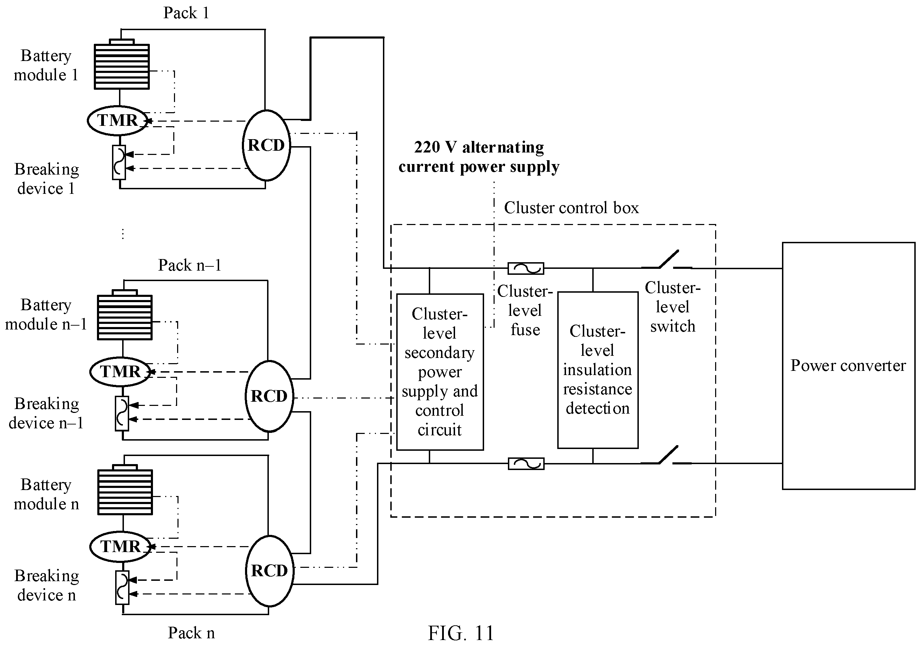

FIG. 11 is a diagram of a structure of another energy storage unit cluster according to an embodiment of this application. As shown in FIG. 11, in a possible implementation, a battery pack provided in this embodiment of this application further includes a second current sensor (a TMR is used as an example in FIG. 11) and a second controller (not shown in FIG. 11). For example, a breaking device in FIG. 11 is a pyrofuse. For example, the energy storage unit cluster shown in FIG. 11 includes a pack 1, ..., a pack n-1, and a pack n. The pack 1 includes a battery module 1, a breaking device 1, a TMR 1, and an RCD 1, and the pack n includes a battery module n, a breaking device n, a TMR n, and an RCD n.

The second current sensor is connected in series to both the battery module and the breaking device in the battery pack. In FIG. 11, the second current sensor is connected in series between a negative electrode of the battery module and the breaking device. It should be understood that the second current sensor may alternatively be connected in series to a positive electrode of the battery module. The second current sensor is configured to detect a magnitude of a current passing through a circuit in which the second current sensor is connected in series. In a possible implementation, the second current sensor may be a device configured to detect the current. In another possible implementation, the second current sensor may alternatively be a circuit configured to detect the current. For example, the first current sensor may be any one of a Hall effect sensor, a tunnel magneto resistance (Tunnel Magneto Resistance, TMR) sensor, an anisotropic magneto resistance (Anisotropic Magneto Resistive, AMR) sensor, and a giant magneto resistance (Giant Magneto Resistive, GMR) sensor. It should be understood that the foregoing examples are merely examples. Any sensor that can be connected in series in a circuit and that detect a passing current may serve as the second current sensor in this embodiment of this application, and the second current sensor may be flexibly selected based on an actual requirement.

It should be noted that the second current sensor and the breaking device need to be connected in series at a same side of the battery module, to implement functions of detection on the short-circuit to ground fault of the cell and breaking protection. For example, both the second current sensor and the breaking device may be connected in series to the negative electrode of the battery module, or both the second current sensor and the breaking device may be connected in series to the positive electrode of the battery module. A relative position relationship between the second current sensor and the breaking device is not limited in embodiments of this application. For example, in a possible implementation, one end of the TMR is connected to a positive output end of the battery module, the other end of the TMR is connected to one end of the breaking device, and the other end of the breaking device is connected to a positive output end of the battery pack. In another possible implementation, one end of the breaking device is connected to a positive output end of the battery module, the other end of the breaking device is connected to one end of the TMR, and the other end of the TMR is connected to a positive output end of the battery pack. In another possible implementation, one end of the TMR is connected to a negative output end of the battery module, the other end of the TMR is connected to one end of the breaking device, and the other end of the breaking device is connected to a negative output end of the battery pack. In another possible implementation, one end of the breaking device is connected to a negative output end of the battery module, the other end of the breaking device is connected to one end of the TMR, and the other end of the TMR is connected to a negative output end of the battery pack.

The second controller is configured to: when the current detected by the second current sensor is greater than a second threshold, control the breaking device in the battery pack to be turned off.

In a possible implementation, the second controller and the second current sensor are integrated on one circuit board. In other words, the second current sensor may be an intelligent current sensor that has a logic determining function and a control function. In another possible implementation, the second controller may be disposed independently of the second current sensor. The second controller may be an independent controller, or may be integrated into another device in the battery pack. In another possible implementation, the second controller may alternatively be a BMS in the battery pack.

In a possible implementation, the first controller and the second controller may be two independent controllers. For example, the first controller and the second controller may be integrated into different devices or circuit boards respectively. For example, the first controller and the second controller may be integrated into a first current controller and a second current controller respectively. In a possible implementation, the first controller and the second controller may be a same controller. In other words, the same controller is used to perform functions of the first controller and the second controller. For example, a BMS may perform the functions of the first controller and the second controller.

The following describes an operating principle of the energy storage unit cluster shown in FIG. 11 provided in this embodiment of this application.

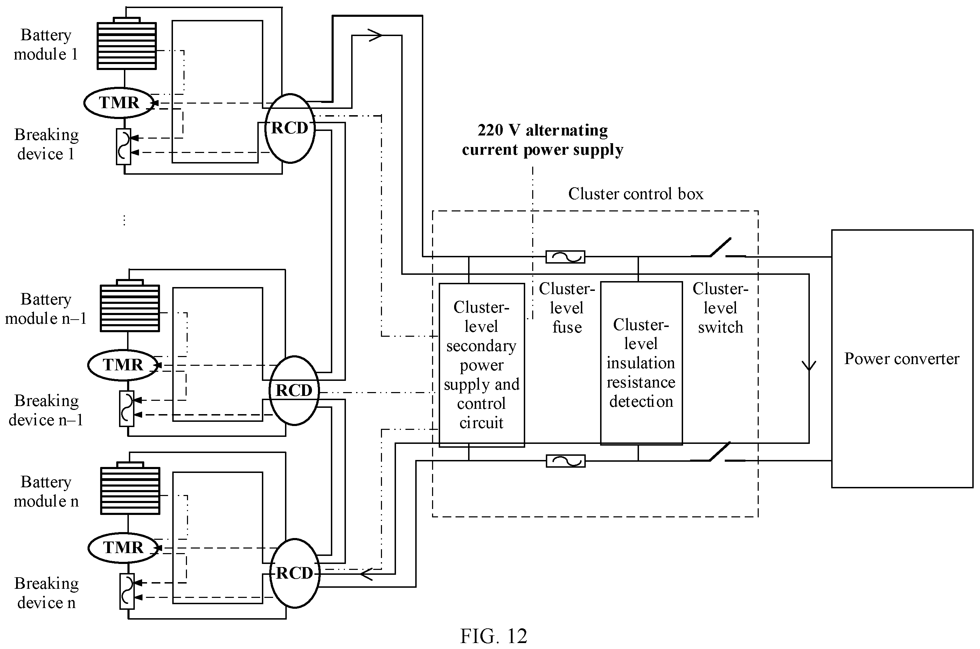

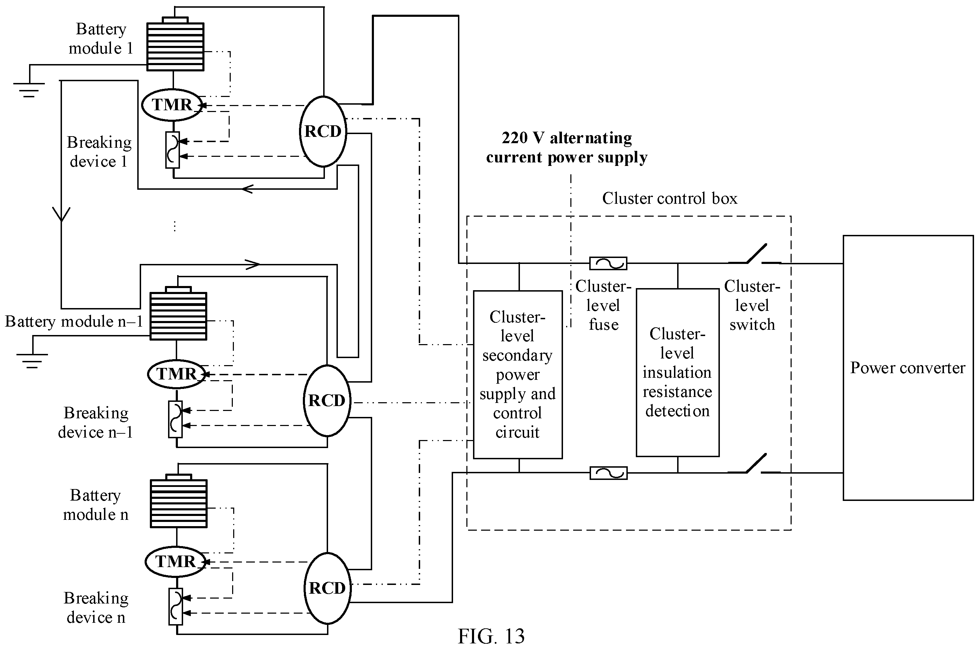

FIG. 12 is a diagram of a current loop of the energy storage system shown in FIG. 11 in a normal operating state. As shown in FIG. 12, when the energy storage system operates normally, a magnitude of a current in a current loop of the energy storage unit cluster is stable, and usually only slightly fluctuates. Therefore, the second threshold is properly set, so that when the energy storage system operates normally, a magnitude of the current detected by the second current sensor is not greater than the second threshold, and the breaking device is in an on state. FIG. 13 is a diagram of a current loop of the energy storage system shown in FIG. 11 in a case in which a short-circuit to ground fault occurs in two or more battery packs. As shown in FIG. 13, the short-circuit to ground fault occurs in cells in the battery pack 1 and the battery pack n-1. In this case, because there are two or more ground points, it is equivalent to that a plurality of cells are connected in series to each other without a load. In this case, a current in the current loop increases sharply. In other words, compared with the current loop in FIG. 12, in the current loop in FIG. 13, a current flowing through the second current sensor increases sharply. In this embodiment of this application, when the magnitude of the current detected by the second current sensor in the battery pack exceeds the second threshold, the breaking device in the same battery pack is controlled to be turned off. As shown in FIG. 13, when the short-circuit to ground fault occurs in the cells in the pack 1 and the pack n-1, a magnitude of a current detected by the second current sensor in the pack 1 is greater than the second threshold, and the second controller in the pack 1 is triggered to control the breaking device 1 to be turned off. A faulty loop in FIG. 13 may be disconnected by turning off the breaking device 1, to avoid a fire risk caused by voltage breakdown.

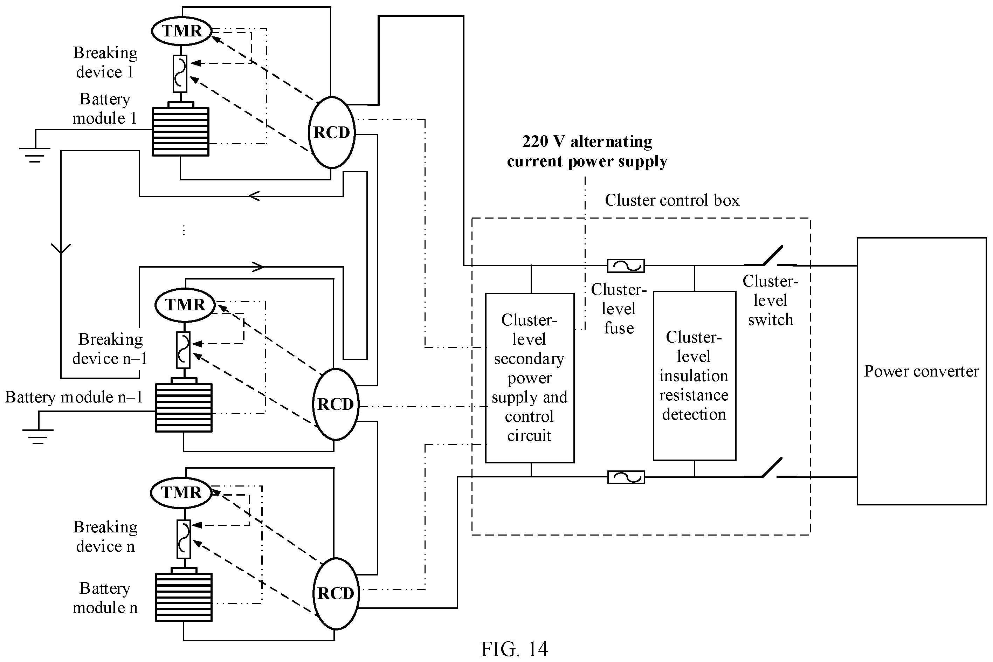

FIG. 14 is a diagram of a current loop of the energy storage system shown in FIG. 11 in a case in which a short-circuit to ground fault occurs in two or more battery packs. A difference between FIG. 14 and FIG. 13 lies in that, the second current sensor and the breaking device are connected in series to the negative electrode of the battery module in FIG. 13, and the second current sensor and the breaking device are connected in series to the positive electrode of the battery module in FIG. 14. As shown in FIG. 14, if the second current sensor and the breaking device are connected in series to the positive electrode of the battery module, when the short-circuit to ground fault occurs in the cells in the pack 1 and the pack n-1, a magnitude of a current detected by the second current sensor in the pack n-1 is greater than the second threshold, and the second controller in the pack n-1 is triggered to control the breaking device n-1 to be turned off. A faulty loop in FIG. 14 may be disconnected by turning off the breaking device n-1, to avoid a fire risk caused by voltage breakdown. It can be learned that, regardless of whether the breaking device and the second current sensor are connected in series to the positive electrode of the battery module or the negative electrode of the battery module, a breaking protection function can be implemented. This is not limited in embodiments of this application.

It should be understood that, in a possible implementation, the second current sensor may exist independently of the first current sensor. In other words, the second current sensor and the breaking device are disposed in the battery pack, the second current sensor detects the short-circuit to ground fault of the cell, and the breaking device is controlled to be turned off, to achieve effect of breaking protection in a fault condition. In this case, only one set of fault detection and breaking protection logic is set in the battery pack.

In another possible implementation, both the first current sensor and the second current sensor may be disposed in the battery pack, and the short-circuit to ground fault of the cell is detected through two different sets of control logic, so that the fault can be detected more reliably and accurately, and breaking protection can be performed in time, to ensure safe operation of the energy storage system. In addition, when the first current sensor or the second current sensor is faulty, a short-circuit to ground fault of a plurality of battery packs can still be detected through the other set of control logic. This further improves reliability of the system.

In this embodiment of this application, only one of the first current sensor and the second current sensor may also be controlled to be in an operating state at a same moment, to save electric energy while improving reliability of the system. Similarly, when the first controller and the second controller are two independent controllers, only one of the first controller and the second controller may be controlled to be in an operating state at a same moment, to save electric energy while improving reliability of the system. It should be noted that the operating state means that the current sensor or the controller is normally powered on for operation, to implement a detection or control function. The operating state corresponds to a non-operating state. In the non-operating state, the current sensor or the controller does not operate, and does not consume power.

Specifically, the foregoing function may be implemented by setting a contention signal. In this embodiment of this application, an operating state of the second current sensor is controlled based on an operating state of the first current sensor. Specifically, when the first current sensor is in an operating state, the second current sensor is controlled to stop operating. When the first current sensor is in a non-operating state, the second current sensor is controlled to operate. Generally, the first current sensor has higher accuracy, faster response, and better effect than the second current sensor in detecting the short-circuit to ground fault of the cell. Therefore, a priority of the first current sensor is set to be higher than a priority of the second current sensor, to help improve effect of detecting the short-circuit to ground fault of the cell.

In a possible implementation, when the function of the first controller and the function of the second controller are implemented by one centralized controller (for example, a BMS) (the centralized controller is referred to as the first controller herein), the first controller is further configured to send a first control signal to the second current sensor when the first current sensor is in the operating state, where the first control signal indicates the second current sensor not to operate. For example, before a first moment, the second current sensor is in the operating state, and detects, in real time, the passing current. At the first moment, the first current sensor starts to operate (for example, a condition for the first current sensor to start to operate may be that the first current sensor is powered on). When detecting that the first current sensor starts to operate, the first controller sends the first control signal to the second sensor. After receiving the first control signal, the second sensor stops operating (the second sensor is switched to the non-operating state). In a possible implementation, when the first current sensor is in the operating state, the first controller continuously sends the first control signal to the second current sensor, or the first controller sends the first control signal to the second current sensor at a preset time interval. When the first controller stops sending the first control signal, it indicates that the first current sensor stops operating (is no longer in the operating state). In this case, the second sensor fails to receive the first control signal, and starts to operate again. In another possible implementation, after sending the first control signal, the first controller stops sending the first control signal, and sends a third control signal to the second current sensor after detecting that the first current sensor stops operating, where the third control signal indicates the second current sensor to operate. The second current sensor starts to operate again after receiving the third control signal.

In another possible implementation, when the first controller and the second controller are two independent controllers, and the first controller and the second controller are respectively configured to control the first current sensor and the second current sensor, switching between the first current sensor and the second current sensor for operating may be controlled by the first controller. Specifically, the first controller is further configured to send a second control signal to the second controller when the first current sensor is in the operating state, where the second control signal indicates the second current sensor not to operate. For example, before a first moment, the second current sensor is in the operating state, and detects, in real time, the passing current. At the first moment, the first current sensor starts to operate (for example, a condition for the first current sensor to start to operate may be that the first current sensor is powered on). When detecting that the first current sensor starts to operate, the first controller sends a first control signal to the second controller. After receiving the first control signal, the second controller controls the second current sensor to stop operating. In a possible implementation, when the first current sensor is in the operating state, the first controller continuously sends the first control signal to the second controller, or the first controller sends the first control signal to the second controller at a preset time interval. When the first controller stops sending the first control signal, it indicates that the first current sensor stops operating (is no longer in the operating state). In this case, the second controller fails to receive the first control signal, and the second controller controls the second current sensor to start to operate again. In another possible implementation, after sending the first control signal, the first controller stops sending the first control signal, and sends a third control signal to the second controller after detecting that the first current sensor stops operating, where the third control signal indicates the second current sensor to operate. After receiving the third control signal, the second controller controls the second current sensor to start to operate again.

In another possible implementation, when the first controller and the second controller are two independent controllers, and the first controller and the second controller are respectively configured to control the first current sensor and the second current sensor, switching between the first current sensor and the second current sensor for operating may alternatively be controlled by the second controller. Specifically, the second controller is further configured to: when the first current sensor is in the operating state, control the second current sensor not to operate. In this case, the second controller detects the operating state of the first current sensor in real time, and controls the operating state of the second current sensor based on the operating state of the first current sensor.

In this embodiment of this application, the first current sensor and the second current sensor may also be controlled to operate in different cases, to detect the cell fault in all time periods. Specifically, when an alternating current power grid connected to the energy storage system is powered on, the first current sensor may detect the short-circuit to ground fault of the cell. When an alternating current power grid connected to the energy storage system is powered off, or the energy storage system is not connected to an alternating current power grid, the second current sensor may detect the short-circuit to ground fault of the cell. In this way, detection on the short-circuit to ground fault of the cell and breaking protection can be implemented regardless of whether the energy storage system is powered on for operation or whether the energy storage system is not powered on during transportation, storage, or the like.

In a possible implementation, because the first current sensor usually has high power consumption, the first current sensor may be powered by a cluster-level secondary power supply, to detect the short-circuit to ground fault of the cell when the cluster-level secondary power supply is powered on, and control the breaking device to perform breaking protection. For example, as shown in FIG. 11, the cluster-level secondary power supply may be disposed in the cluster control box. A first end of the cluster-level secondary power supply is connected to a positive output end of the energy storage unit cluster, and a second end of the cluster-level secondary power supply is connected to a negative output end of the energy storage unit cluster. For example, the cluster-level secondary power supply may be powered by a direct current bus, or the cluster-level secondary power supply may be directly powered by the alternating current power grid.

When the first controller is integrated into the first current sensor, the first controller may also be powered by the cluster-level secondary power supply. When the first controller is integrated into another device, or when the first controller is an independent controller, the first controller may also be powered by the cluster-level secondary power supply.

When the energy storage system is connected to the alternating current power grid and the alternating current power grid is powered on, the cluster-level secondary power supply is also powered on. The cluster-level secondary power supply is used to supply power to the first current sensor and/or the first controller, to ensure normal operation of the first current sensor and/or the first controller.

In a possible implementation, to ensure that the short-circuit to ground fault of the cell can still be detected when the energy storage system is not connected to the alternating current power grid or when the alternating current power grid connected to the energy storage system is powered off, the second current sensor may be powered by the battery module in the same battery pack, so that functions of detection on the short-circuit to ground fault and breaking protection can be implemented without an external power supply.

When the second controller is integrated into the second current sensor, the second controller may also be powered by the battery module in the same battery pack. That is, both the second current sensor and the second controller are powered by the same battery module. This can ensure that the short-circuit to ground fault of the cell can still be detected when the energy storage system is not connected to the alternating current power grid or when the alternating current power grid connected to the energy storage system is powered off, and can ensure that breaking protection can be performed in time.

It is clear that a person skilled in the art can make various modifications and variations to this application without departing from the spirit and scope of this application. In this way, this application is intended to cover these modifications and variations of this application provided that they fall within the scope of protection defined by the claims and their equivalent technologies of this application.

## Claims

1. A battery pack having a breaking protection function, wherein the battery pack comprises a battery module, a breaking device, a first current sensor, and a first controller;
the battery module comprises a plurality of single cells;
the breaking device is connected in series to the battery module;
a first end of the first current sensor is connected to a positive output end of the battery pack, a second end of the first current sensor is connected to a negative output end of the battery pack, and the first current sensor is configured to detect a current difference between the positive output end and the negative output end; and
the first controller is configured to: when the current difference is greater than a first threshold, control the breaking device to be turned off.

2. The battery pack according to claim 1, wherein the battery pack further comprises a second current sensor and a second controller, the second current sensor is connected in series to the battery pack and the breaking device, the second current sensor is configured to detect a magnitude of a passing current, and the second controller is configured to: when the current detected by the second current sensor is greater than a second threshold, control the breaking device to be turned off.

3. The battery pack according to claim 1 or 2, wherein the battery pack further comprises the second current sensor, the second current sensor is connected in series to the battery module and the breaking device, the second current sensor is configured to detect a magnitude of a passing current, and the first controller is configured to: when the current detected by the second current sensor is greater than the second threshold, control the breaking device to be turned off.

4. The battery pack according to claim 2 or 3, wherein both the second current sensor and the breaking device are connected in series between the battery pack and the positive output end of the battery pack, or both the second current sensor and the breaking device are connected in series between the battery pack and the negative output end of the battery pack.

5. The battery pack according to any one of claims 2 to 4, wherein only one of the first current sensor and the second current sensor is in an operating state at a same moment.

6. The battery pack according to claim 2, 4, or 5, wherein only one of the first controller and the second controller is in an operating state at a same moment.

7. The battery pack according to claim 2, 4, or 5, wherein the first controller is further configured to send a second control signal to the second controller when the first current sensor is in the operating state, and the second controller is further configured to control, based on the second control signal, the second current sensor not to operate.

8. The battery pack according to any one of claims 2 and 4 to 7, wherein the second current sensor or the second controller is powered by the battery module.

9. The battery pack according to any one of claims 3 to 5, wherein the first controller is further configured to control the second current sensor when the first current sensor is in the operating state.

10. The battery pack according to any one of claims 2 to 9, wherein the second current sensor is at least one of the following:
a Hall effect sensor, a tunnel magneto resistance TMR sensor, an anisotropic magneto resistance AMR sensor, and a giant magneto resistance GMR sensor.

11. The battery pack according to any one of claims 1 to 10, wherein the first current sensor is a residual current operated protective device RCD.

12. The battery pack according to any one of claims 1 to 11, wherein the breaking device is at least one of the following:
a switch, a pyrofuse, a contactor, a relay, a circuit breaker, an insulated gate bipolar transistor (IGBT), and a metal-oxide-semiconductor (MOS) field-effect transistor.

13. An energy storage system having a breaking protection function, wherein the energy storage system comprises at least one energy storage unit cluster and a direct current/alternating current (DC/AC) converter, the energy storage unit cluster comprises at least two battery packs according to any one of claims 1 to 12, the at least two battery packs are connected in series, and the energy storage unit cluster is connected to an alternating current power grid or a load through the DC/AC converter.

14. The energy storage system according to claim 13, wherein the energy storage unit cluster further comprises a secondary power supply, a first end of the secondary power supply is connected to a positive output end of the energy storage unit cluster, a second end of the secondary power supply is connected to a negative output end of the energy storage unit cluster, and the secondary power supply is configured to supply power to the first current sensor or the first controller.
